# EUROPEAN PATENT APPLICATION

(11) **EP 4 468 506 A1**
(43) Date of publication of application: **27.11.2024**
(21) Application number: 22922313.6
(22) Date of filing: 14.09.2022
(51) Int. Cl.: H01M 50/531, H01M 50/538, H01M 50/342, H01M 50/152, H01M 50/548

(54) **SECONDARY BATTERY**

(30) Priority: 19.01.2022 KR 20220007827
(71) Applicant: SAMSUNG SDI CO., LTD., Giheung-gu Yongin-si, Gyeonggi-do 17084 (KR)
(72) Inventor: JUNG, Hyun Ki, Yongin-si Gyeonggi-do 17084 (KR)
(74) Representative: Gulde & Partner
(86) International application number: PCT/KR2022/013723
(87) International publication number: WO 2023/140454

(57) **Abstract**

The present disclosure is to provide a cylindrical secondary battery that facilitates connecting a busbar by having both positive and negative electrodes on one side, and that has highly reliable electrical contact between an electrode assembly and a case. To that end, the present disclosure provides a secondary battery comprising: an electrode assembly; a case for housing the electrode assembly; a current collector plate welded to the electrode assembly and case; and a cap plate, located above the current collector plate, for sealing the case.

## Description

### TECHNICAL FIELD

The present disclosure relates to a secondary battery.

### BACKGROUND ART

In general, a cylindrical secondary battery includes a cylindrical electrode assembly, a cylindrical case accommodating the electrode assembly and an electrolyte, and a cap assembly coupled to an opening of an upper end of the case to seal the can and electrically connected to the electrode assembly to electrically connect an external component to the electrode assembly.

The cylindrical secondary battery generally has a structure in which a case having negative polarity and a cap assembly having positive polarity are insulated from each other by a gasket. In the case of a battery module using a plurality of cylindrical secondary batteries, which are connected to each other, because busbars have to be connected to upper and lower portions of the secondary batteries, respectively, there is a limitation in that a structure is complicated, and a manufacturing time increases.

The above-described information disclosed in the technology that serves as the background of the present disclosure is only for improving understanding of the background of the present disclosure and thus may include information that does not constitute the related art.

### DISCLOSURE OF THE INVENTION

### TECHNICAL PROBLEM

The present disclosure provides a cylindrical secondary battery in which both a positive electrode terminal and a negative electrode terminal are provided to facilitate connection of a busbar, and electrical connection reliability between an electrode assembly and a case are excellent. The present disclosure provides a cylindrical secondary battery including a current collector plate that allows an electrolyte to be injected and discharges an internal gas if thermal runaway.

### TECHNICAL SOLUTION

A secondary battery according to the present disclosure includes: an electrode assembly; a case configured to accommodate the electrode assembly; a current collector plate welded to each of the electrode assembly and the case; and a cap plate disposed on the current collector plate to seal the case.

In some embodiments, the current collector plate may include: an electrode welding part welded to the electrode assembly; a rigid reinforcement part provided outside the electrode welding part; and a case welding part provided outside the rigid reinforcement part so as to be welded to the case.

In some embodiments, the electrode welding part may further include a through-hole provided in an area corresponding to a center of the cap plate.

In some embodiments, the rigid reinforcement part or the case welding part may have a thickness greater than that of the electrode welding part.

In some embodiments, the secondary battery may further include a vent notch provided along a boundary between the electrode welding part and the rigid reinforcement part.

In some embodiments, the case welding part may be bent from the rigid reinforcement part to the cap plate.

In some embodiments, the case welding part may be welded to a beading part of the case.

In some embodiments, the secondary battery may further include an insulating gasket disposed between the case welding part and the cap plate.

In some embodiments, the current collector plate may have an outer diameter greater than that of the electrode assembly.

### ADVANTAGEOUS EFFECTS

The present disclosure may provide the cylindrical secondary battery in which both the positive electrode terminal and the negative electrode terminal are provided to facilitate the connection of the busbar, and the electrical connection reliability between the electrode assembly and the case are excellent. The present disclosure may provide the cylindrical secondary battery including the current collector plate that allows the electrolyte to be injected and discharges the internal gas if the thermal runaway.

### BRIEF DESCRIPTION OF THE DRAWINGS

FIG. 1 illustrates a perspective view of an exemplary secondary battery according to the present disclosure.
FIG. 2 illustrates a cross-sectional view of the secondary battery of FIG. 1.
FIG. 3 illustrates an enlarged cross-sectional view of a portion 3 in the secondary battery of FIG. 2.
FIGS. 4A and 4B illustrate plan and cross-sectional views of a negative electrode current collector plate in an exemplary secondary battery according to the present disclosure.

### MODE FOR CARRYING OUT THE INVENTION

Hereinafter, preferred embodiments of the present disclosure will be described in detail with reference to the accompanying drawings.

Embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A may be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, processes, operations, members, elements, and/or groups of these, nor exclude the presence or addition of one or more other different shapes, numbers, processes, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present disclosure is not limited thereto. For example, an element or feature shown in the drawings is turned inside out, the element or feature described as "beneath" or "below" may change into "above" or "upper". Thus, the term "below" may encompass the term "above" or "below".

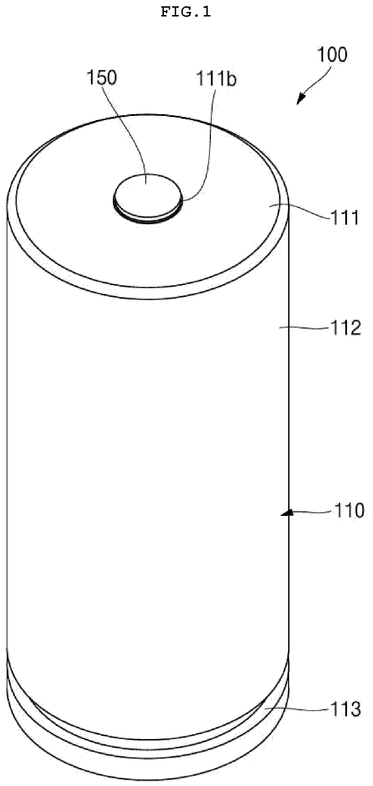

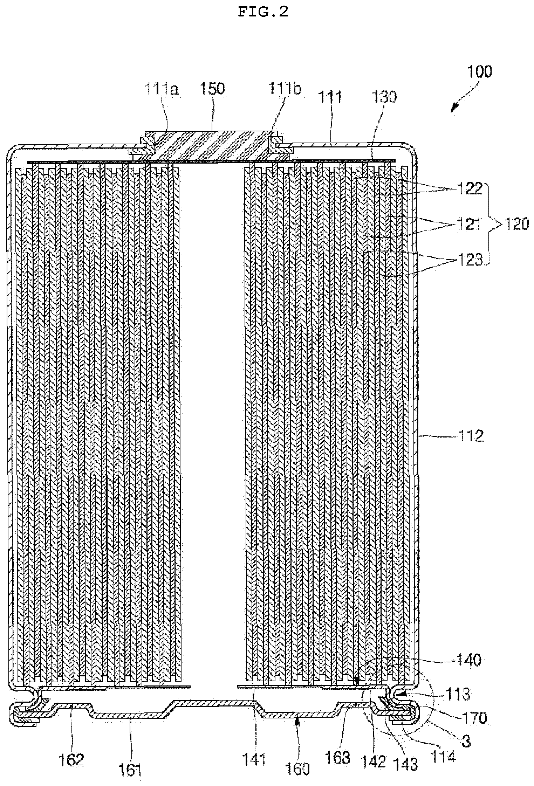

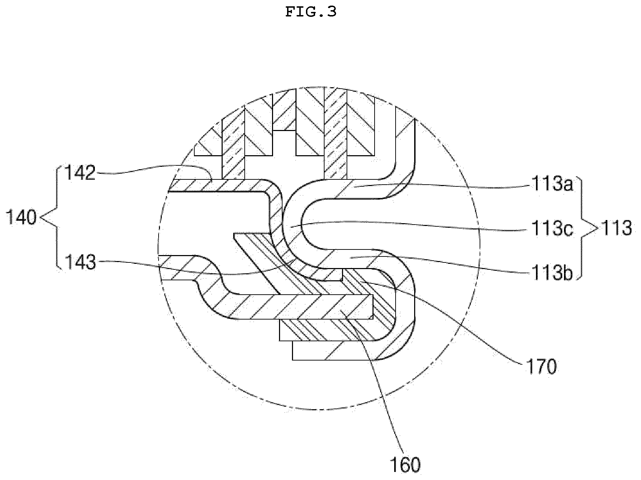

FIG. 1 illustrates a perspective view of an exemplary secondary battery 100 according to the present disclosure, FIG. 2 illustrates a cross-sectional view of the secondary battery 100 of FIG. 1, and FIG. 3 illustrates an enlarged cross-sectional view of a portion 3 in the secondary battery 100 of FIG. 2.

As illustrated in FIGS. 1 to 3, the secondary battery 100 according to the present disclosure may include a cylindrical case 110, a cylindrical electrode assembly accommodated in the cylindrical case 110, a rivet terminal 150 coupled to a terminal hole provided in one end of the cylindrical case 110, and a cap plate 160 sealing an opening of the other end of the cylindrical case 110.

The cylindrical case 110 may include a circular top surface part 111 and a side surface part 112 extending downward from an edge of the top surface part 111. In some embodiments, the top surface part 111 and the side surface part 112 of the cylindrical case 110 may be integrated with each other. In some embodiments, the case 110 may be referred to as a can or housing.

In some embodiments, the circular top surface 2part 111 may have a flat circular plate shape and may include a terminal hole 111a passing through a central portion thereof. The top surface part 111 may be coupled by inserting the rivet terminal 150 into the terminal hole 111a. In some embodiments, a first gasket 115 for sealing and electrical insulation may be further disposed between the terminal hole 111a and the rivet terminal 150. The first gasket 111b may block contact between the rivet terminal 150 and the cylindrical case 110 to electrically separate the rivet terminal 150 from the cylindrical case 110. The terminal hole 111a of the top surface part 111 of the cylindrical case 110 may be sealed by the first gasket 111b. In some embodiments, the first gasket 111b may include a resin material such as polyethylene (PE), polypropylene (PP), polyethylene terephthalate (PET), or the like.

In the secondary battery 100, a lower portion of the cylindrical case 110 may be opened during a manufacturing process. Thus, during the process of manufacturing the secondary battery 100, the electrode assembly 120 may be inserted together with an electrolyte through an opened lower portion of the cylindrical case 110. Here, the electrolyte and the electrode assembly 120 may be inserted into the cylindrical case 110 in a state in which the opened lower portion faces an upper side. After the electrolyte and the electrode assembly 120 are inserted into the cylindrical case 110, the cap plate 160 may be coupled to the opened lower end to seal the inside of the cylindrical case 110. In some embodiments, the electrolyte may serve to enable movement of lithium ions between a positive electrode plate 121 and a negative electrode plate 122, which constitute the electrode assembly 120. In some embodiments, the electrolyte may be a non-aqueous organic electrolyte that is a mixture of lithium salt and a high-purity organic solvent. In some embodiments, the electrolyte may be a polymer using a polymer electrolyte or a solid electrolyte, and the type of the electrolyte is not limited here.

The cylindrical case 110 may include steel, a steel alloy, aluminum, or an aluminum alloy. In some embodiments, in the cylindrical case 110, a beading part 113 recessed inward may be provided outside the cap plate 160 to prevent the cap assembly 120 from being separated, and a crimping part 114 bent inward may be provided at a lower portion of the case 110.

In the cylindrical case 110, after the electrode assembly 120 is inserted through the opened lower end, the beading part 113 may be provided to prevent the electrode assembly 120 from being separated from the cylindrical case 110. The beading part 113 may include an upper flat part 113a and a lower flat part 113b that are approximately parallel to the top surface part 111, and a connection part 113c connecting the upper flat part 113a to the lower flat part 113b. Outer surfaces of the upper flat part 113a and the lower flat part 113b may face each other. In some examples, each of the outer surfaces may be an outer surface of the cylindrical case 110.

An edge of the bottom surface of the electrode assembly 120 may be seated on the upper flat part 113a of the beading part 113. That is, the edge of the bottom surface of the electrode assembly 120 may be in contact with a top surface of the upper flat part 113a of the beading part 113.

The electrode assembly 120 may include a positive electrode plate 121 coated with a positive electrode active material, a negative electrode plate 122 coated with a negative electrode active material, and a separator 123 between the positive electrode plate 121 and the negative electrode plate 122 to prevent short circuit from occurring between the positive electrode plate 121 and the negative electrode plate 122 and enable only the lithium ions to move. The electrode assembly 120 is wound from a winding end in a substantially cylindrical shape after the positive electrode plate 121, the negative electrode plate 122, and the separator 123 are stacked. In addition, in the electrode assembly 120, a positive electrode non-coating portion that is not coated with the positive electrode active material may protrude upward from the positive electrode plate 121, and a negative electrode non-coating portion that is not coated with the negative electrode active material may protrude downward from the negative electrode plate 122.

The positive electrode plate 121 may include a positive electrode current collector plate that is a plate-shaped metal foil made of aluminum (Al) and a positive electrode active material made of transition metal oxide applied to at least one surface of the positive electrode current collector plate. In addition, the positive electrode plate 121 may include the positive electrode non-coating portion, which is not coated with the positive electrode active material, on an upper end thereof. The positive electrode non-coating portion may protrude toward an upper side of the electrode assembly 120. That is, the positive electrode non-coating portion of the positive electrode plate 121 may protrude more upward than the negative electrode plate 122 and the separator 123.

The negative electrode plate 122 may include a negative electrode current collector plate that is a plate-shaped metal foil made of copper (Cu) or nickel (Ni) and a negative electrode active material such as graphite or carbon applied on at least one surface of the negative electrode current collector plate. In addition, the negative electrode plate 122 may include a negative electrode non-coating portion, which is not coated with the negative electrode active material, on a lower end thereof. The negative electrode non-coating portion may protrude toward a lower side of the electrode assembly 120. That is, the negative electrode non-coating portion of the negative electrode plate 122 may protrude more downward than the positive electrode plate 121 and the separator 123.

The separator 123 may be made of polyethylene (PE) or polypropylene (PP), but the present disclosure is not limited thereto. The separator may prevent the electrical short between the positive electrode plate 121 and the negative electrode plate 122 from occurring to allow the lithium ions to move only.

A positive electrode current collector plate 130 may be a circular metal plate having a shape corresponding to the top surface of the electrode assembly 120. A planar size of the positive electrode collector plate 130 may be equal to or less than a size of the top surface of the electrode assembly 120. The positive electrode current collector plate 130 may be made of aluminum (Al). The positive electrode collector plate 130 may be fixed and electrically connected to the positive electrode plate 121 exposed to the upper side of the electrode assembly 120 by welding in a state in which the bottom surface of the positive electrode collector plate 130 is in contact with the top surface of the electrode assembly 120. A top surface of the positive electrode current collector plate 130 may be fixed and electrically connected to the rivet terminal 150 by the welding in a state of being in contact with the bottom surface of the rivet terminal 150. The positive electrode collector plate 130 may serve as a passage for a current flow between the positive electrode plate 121 of the electrode assembly 120 and the rivet terminal 150.

The negative electrode current collector plate 140 may include a circular electrode welding part corresponding to the bottom surface of the electrode assembly 120, a rigid reinforcement part 142 provided on an edge of the electrode welding part 141 to correspond to a circumference of the bottom surface of the electrode assembly 120, and a case welding part 143 extending downward from an edge of the rigid reinforcement part 142. The negative electrode current collector plate 140 may include copper, a copper alloy, nickel-plated copper, nickel, a nickel alloy, steel, a steel alloy, aluminum, or an aluminum alloy.

Top surfaces of the electrode welding part 141 and the rigid reinforcement part 142 may be in contact with the bottom surface of the electrode assembly 120. The top surfaces of the electrode welding part 141 and the rigid reinforcement part 142 may be fixed and electrically connected to the negative electrode plate 122, which is exposed to a lower side of the electrode assembly 120, by the welding in the state of being in contact with the bottom surface of the electrode assembly 120.

The case welding part 143 may be bent downward along an edge of the rigid reinforcement part 142. In some embodiments, after the beading part 113 is provided on the cylindrical case 110, the negative electrode current collector plate 140 may be seated on the lower flat part 113b of the beading part 113 so as to be electrically/mechanically coupled to each other.

The case welding part 143 may be in contact with inner surfaces of the connection part 113c of the beading part 113 and the lower flat part 113b. In some embodiments, each of the inner surfaces may be the inner surface of the cylindrical case 110. In some embodiments, an end of the case welding part 143 may be disposed below the lower flat part 113b of the beading part 113. In some embodiments, the case welding part 143 may be welded to be in contact with the inner surface of the lower flat part 113b of the beading part 113 and may be fixed and electrically connected to the cylindrical case 110. Thus, the negative electrode current collector plate 140 may serves as a flow path of current between the negative electrode plate 122 of the electrode assembly 120 and the cylindrical case 110.

The welding of the case welding part 143 and the beading part 113 may be performed in the direction of the case welding part 143 in the state in which the negative electrode current collector plate 140 is seated on the lower portion of the beading part 113, before the crimping part 114 of the cylindrical case 110 is provided. In addition, the case welding part 143 and the beading part 113 may be welded to the case welding part 143 through the beading part 113 outside the cylindrical case 110 after the cylindrical case 110 is sealed. Here, to prevent damage to the second gasket 170 due to the welding, the second gasket 170 may be further provided with a groove in an area corresponding to the welding part.

The rivet terminal 150 may be inserted into the terminal hole 111a provided in the top surface part 111 of the cylindrical case 110 and electrically connected to the positive electrode collector plate 130. The rivet terminal 150 may be made of a material that is the same as or similar to that of each of the positive electrode collector plate 130 and the positive electrode plate 121. Each of a diameter of a portion of the rivet terminal 150, which is exposed to an upper portion of the cylindrical case 110 and a diameter of the rivet terminal 150, which is disposed inside the cylindrical case 110 may be greater than that of a portion of the rivet terminal 150, which is disposed in the terminal hole 111a. For convenience, a portion of the rivet terminal 150, which is exposed to the upper portion of the cylindrical case 110, refers to an upper end, and a portion of the rivet terminal 150, which is disposed inside the cylindrical case 110 to face the electrode assembly 120, refers to a lower end. The rivet terminal 150 may be coupled to the terminal hole 111a of the top surface part 111 of the cylindrical case 110 upward from the below, and then, the upper end of the rivet terminal 150 may be compressed and deformed (compression molded) through a processing method such as pressing or spinning and be in close contact with the top surface part 111. Here, a first gasket 111b may be disposed between the rivet terminal 150 and the terminal hole 111a to electrically insulate the rivet terminal 150 from the cylindrical case 110 and seal the rivet terminal 150 and the cylindrical case 110. The rivet terminal 150 may be electrically connected to the positive electrode plate 121 of the electrode assembly 120 through the positive electrode current collector plate 130.

The cap plate 160 may be a circular metal plate and may be coupled to the lower end of the cylindrical case 110. The cap plate 160 may be coupled to the lower end of the cylindrical case 110 in a state in which the second gasket 170 is interposed so as to be prevented to electrically connected to the cylindrical case 110. Because the cap plate 160 is not electrically connected to the positive electrode or the negative electrode of the electrode assembly 120, there may be no separate electrical polarity.

The cap plate 160 may be fixed by forming the crimping part 114 at the lower end of the cylindrical case 110 in the state in which the edge of the cap plate 160 is seated on the lower portion of the lower flat part 113b of the beading part 113 of the cylindrical case 110. Here, the cap plate 160 may be seated on the beading part 113 in the state in which the opened lower portion of the cylindrical case 110 faces the upper side.

In some embodiments, the cap plate 160 may be seated on the lower portion of the lower flat part 113b of the cylindrical case 110 with the second gasket 170 therebetween. Thereafter, the crimping part 114 of the cylindrical case 110 may be bent to the inside of the cap plate 160 to press the second gasket 170, thereby coupling the cap plate 160 to the cylindrical case 110. Here, because the end of the negative electrode current collector plate 140 is located in the lower flat part 113b of the beading part 113, the cap plate 160 and the cylindrical case 110 may be more easily sealed with the second gasket 170 therebetween. For example, if the end of the negative electrode current collector plate 140 extends beyond the lower flat part 113b of the beading part 113, an end of the negative electrode current collector plate 140 may be broken or disconnected if the crimping part 114 presses the second gasket 170 to seal a gap between the cap plate 160 and the cylindrical case 110. Therefore, the sealing between the cap plate 160 and the cylindrical case 110 may not be easy.

The cap plate 160 may be provided with at least one protrusion 161 protruding downward. For example, the protrusion 161 of the cap plate 160 may be spaced apart from a center and protrude downward to have a ring shape on the plane. For another example, the protrusion 161 of the cap plate 160 may protrude downward to have multiple patterns. The cap plate 160 may be provided with the protrusion 161 to support an internal pressure of the cylindrical case 110. In addition, a bottom surface of the protrusion 161 of the cap plate 160 may be disposed above the bottom surface of the crimping part 114 of the cylindrical case 110. That is, the crimping part 114 of the cylindrical case 110 may protrude further downward compared to the protrusion 161 of the cap plate 160. Therefore, if the secondary battery 100 is disposed on one flat surface, the crimping part 114 of the cylindrical case 110 may be in contact with the one surface, and the protrusion 161 of the cap plate 160 may be spaced apart from the one surface. In addition, because the crimping part 114 of the cylindrical case 110 protrudes further downward compared to the protrusion 161 of the cap plate 160, even if the cap plate 160 is expanded due to the internal pressure of the cylindrical case 110, the cap plate 160 may be prevented from being in contact with the one surface. Thus, the secondary battery 100 may be maintained in overall height even if the internal pressure of the cylindrical case 110 increases.

In addition, a notch 162 may be provided in the cap plate 160 so as to be opened at a set pressure. The cap plate 160 may prevent the secondary battery 100 from being exploded if an internal pressure of the cylindrical case 110 exceeds a breaking pressure. That is, if the excessive internal pressure is generated inside the cylindrical case 110, the notch 162 may be broken, and thus, the excessive internal pressure may be released. The notch 162 of the cap plate 160 may be spaced apart from a central portion and may be provided in the ring shape on the plane. For another example, the notch 162 may be provided to have a plurality of patterns, and the present disclosure is not limited to the shape of the notch 162.

In addition, the notch 162 may be provided to be spaced apart from the protrusion 161. Preferably, the notch 162 may not be provided with the protrusion 161 in the cap plate 160 and may be provided in a concave part 163 that is concave in the direction of the cylindrical case 110 relative to the protrusion 161. Because the cap plate 160 is provided with an unevenness by the concave part 163 and the protrusion 161, the cap plate 160 may withstand the internal pressure even if the internal pressure of the cylindrical case 110 increases.

The second gasket 170 may be made of a resin material such as polyethylene (PE), polypropylene (PP), polyethylene terephthalate (PET), or the like. The second gasket 170 may press the case 110 and the cap plate 160 to seal the gap between the cylindrical case 110 and the cap plate 160, thereby preventing the cap plate 160 from being separated from the cylindrical case 110.

As described above, because both the negative electrode and the positive electrode are provided on the top surface of the secondary battery 100, if electrically connecting the plurality of secondary batteries 100 to each other through the bus bar, only the top surface needs to be connected, and thus, the bus bar connection structure may be simplified.

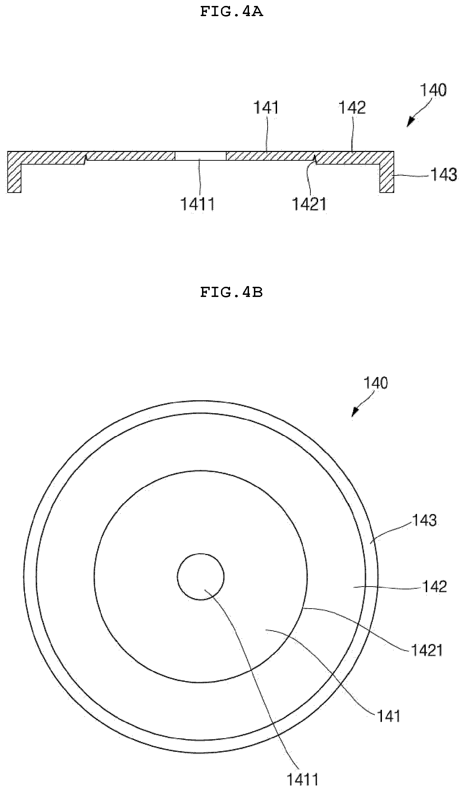

As illustrated in FIGS. 4A and 4B, the current collector plate 140 welded to each of the case 110 and the electrode assembly 120 may include an electrode welding part 141 welded to the electrode assembly 120, a rigid reinforcement part 142 provided outside the rigid reinforcement part 142, and a case welding part 143 provided outside the rigid reinforcement part 142 and welded to the case 110.

In some embodiments, the electrode welding part 141 may further include a through-hole 1411 provided in an area corresponding to the center of the electrode assembly 120 and/or the cap plate 160. The through-hole 1411 may allow the electrolyte to be well injected into the electrode assembly 120 during the manufacturing process of the secondary battery 100.

In some embodiments, the top surface of the current collector plate 140 may be generally flat, but the bottom surface of the current collector plate 140 may not be flat. In some embodiments, each of the rigid reinforcement part 142 and/or the case welding part 143 may be greater than that of the electrode welding part 141. In some embodiments, rigidity of the current collector plate 140 may be reinforced by the rigidity reinforcement part 142 and/or the case welding part 143.

In some embodiments, the thickness of the electrode welding part 141 may be less than that of each of the rigid reinforcement part 142 and/or the case welding part 143. Thus, the welding between the electrode welding part 141 and the electrode assembly 120 may be performed relatively easily.

In some embodiments, the current collector plate 140 may further include a vent notch 1421 provided along a boundary between the electrode welding part 141 and the rigid reinforcement part 142. In some embodiments, the vent notch 1421 may be provided in the bottom surface of the current collector plate 140. Thus, if the secondary battery 100 thermally runs away, the vent notch 1421 may be broken to be opened, and thus, an internal gas may be discharged to the outside more quickly.

As described above, the case welding part 143 may be extended and bent from the rigid reinforcement part 142 toward the cap plate 160, and the case welding part 143 may be welded to the beading part 113 of the case 110.

In some embodiments, an outer diameter of the current collector plate 140 may be greater than an outer diameter of the electrode assembly 120. Thus, if the current collector plate 140 is coupled to the case 110, the current collector plate 140 and the case 110 may be coupled in a press-fit manner. In some embodiments, after the current collector plate 140 is coupled to the case 110 in the press-fit manner, the case welding part 143 of the current collector plate 140 may be deformed along an outline of the beading part 113 during the process of providing the beading part 113.

As described above, the present disclosure may provide the secondary battery 100 in which the current collector plate 140 is in strongly electrical/mechanical contact with the case 110 by the current collector plate 140 having the outer diameter greater than that of the electrode assembly 120.

In addition, according to the present disclosure, if beading and curling processes of the case 110 are performed, the current collector plate 140 may prevent the case 110 from being undesirably deformed. That is, the thickness of the current collector plate 140 (in particular, the thickness of each of the rigid reinforcement part 142 and the case welding part 143) may be provided to be thick, and thus, the current collector plate 140 may support the contact area with the case 110, if performing the beading and curling processes, a phenomenon of the case 110 being distorted or asymmetrically deformed may be suppressed.

Furthermore, the thickness of the current collector plate 140 (in particular, the thickness of the electrode welding part 141) may be relatively thin to improve weldability with the electrode assembly 120. In addition, if the secondary battery 100 thermally runs away, the internal gas may be quickly discharged to the outside by the operation of the vent notch 1421, and the electrolyte injection time may be shortened due to the central through-hole 1411.

The above-mentioned embodiment is merely an embodiment of the secondary battery, and thus, the present disclosure is not limited to the foregoing embodiment, and also it will be understood by those of ordinary skill in the art that various changes in form and details may be made therein without departing from the spirit and scope of the present disclosure as defined by the following claims.

## Claims

1. A secondary battery comprising:
an electrode assembly;
a case configured to accommodate the electrode assembly;
a current collector plate welded to each of the electrode assembly and the case; and
a cap plate disposed on the current collector plate to seal the case.

2. The secondary battery as claimed in claim 1, wherein the current collector plate comprises:
an electrode welding part welded to the electrode assembly;
a rigid reinforcement part provided outside the electrode welding part; and
a case welding part provided outside the rigid reinforcement part so as to be welded to the case.

3. The secondary battery as claimed in claim 2, wherein the electrode welding part further comprises a through-hole provided in an area corresponding to a center of the cap plate.

4. The secondary battery as claimed in claim 2, wherein the rigid reinforcement part or the case welding part has a thickness greater than that of the electrode welding part.

5. The secondary battery as claimed in claim 2, further comprising a vent notch provided along a boundary between the electrode welding part and the rigid reinforcement part.

6. The secondary battery as claimed in claim 2, wherein the case welding part is bent from the rigid reinforcement part to the cap plate.

7. The secondary battery as claimed in claim 2, wherein the case welding part is welded to a beading part of the case.

8. The secondary battery as claimed in claim 2, further comprising an insulating gasket disposed between the case welding part and the cap plate.

9. The secondary battery as claimed in claim 1, wherein the current collector plate has an outer diameter greater than that of the electrode assembly.
